(19) Europäisches Patentamt
European Patent Office
Office européen des brevets

(11) **EP 3 683 052 A1**

(12) **EUROPEAN PATENT APPLICATION**
published in accordance with Art. 153(4) EPC

(43) Date of publication:
**22.07.2020 Bulletin 2020/30**

(51) Int Cl.:
**B32B 25/08** *(2006.01)*    **B32B 27/32** *(2006.01)*

(21) Application number: **18855801.9**

(22) Date of filing: **12.09.2018**

(86) International application number:
**PCT/JP2018/033751**

(87) International publication number:
**WO 2019/054397 (21.03.2019 Gazette 2019/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.09.2017 JP 2017175226**

(71) Applicant: **Idemitsu Unitech Co., Ltd.**
**Tokyo 108-0014 (JP)**

(72) Inventor: **KONDO, Kaname**
**Sodegaura-shi**
**Chiba 299-0205 (JP)**

(74) Representative: **Gille Hrabal**
**Brucknerstrasse 20**
**40593 Düsseldorf (DE)**

(54) **LAMINATE, MOLDED ARTICLE, AND METHOD FOR PRODUCING MOLDED ARTICLE**

(57)    This laminate includes a thermoplastic resin layer and a protective layer, the protective layer including a welding layer, and the welding layer including a thermoplastic elastomer.

FIG.1

1: Laminate
20: Protective layer (welding layer)
10: Thermoplastic resin layer

**EP 3 683 052 A1**

**Description**

Technical Field

The invention relates to a laminate, a molded article and a method for producing the molded article.

Background Art

Painting has been used as a method of improving design performance of appearance in various fields of an automobile, home electronics, a building material, daily commodities, an information communication device, and the like. However, painting causes emission of a large amount of volatile organic compounds (VOC), and therefore has a large environmental load. Further, in control of temperature and humidity in a painting booth, or in a baking step, a large amount of energy is consumed, and a large amount of carbon dioxide is emitted. In particular, in an automobile manufacturing process, carbon dioxide emitted by painting accounts for 20% of the total in the manufacturing process. In order to reduce the environmental load associated with the painting, a substitute means for painting has been actively developed.

Specific examples of the substitute means for painting include a method for coating a decorative sheet on a housing surface, in which the environmental load is lower than in the painting. A resin such as polypropylene, polycarbonate, an acrylic resin, an acrylonitrile-butadiene-styrene copolymer (hereafter, also referred to as an "ABS resin"), and the like is ordinarily used for the decorative sheet.

As the decorative sheet, Patent Document 1 discloses a decorated sheet for insert molding in which a substrate sheet, a printed layer and a surface resin layer are laminated, and as the substrate sheet, the ABS resin in which a butadiene component proportion is 10 to 33 wt% of the total is used.

Patent Document 2 discloses a sheet for decorative molding in which a first layer formed of a transparent thermoplastic resin, a second layer formed of a polyolefin-based resin and a third layer formed of a mixed resin of the ABS resin and the polyolefin-based resin are laminated.

Related Art Documents

Patent Documents

Patent Document 1: JP-A-2008-94074
Patent Document 2: JP-A-2003-266615
Patent Document 3: JP-A-2012-240421

Summary of the Invention

Specific examples of a method for obtaining a molded article coated with a decorative sheet include a method for integrating the decorative sheet and a molding resin by insert molding, in-mold molding or the like, and on the occasion, it becomes important to sufficiently adhere the decorative sheet with the molding resin.

Specific examples of a method for adhering the decorative sheet with the molding resin include a method for providing the decorative sheet with a binder to be adhered with the molding resin by screen printing, a method for laminating a resin sheet to be welded with the molding resin thereon, and the like.

With regard to the former, the binder corresponding thereto when the molding resin is polypropylene, polycarbonate or the ABS resin is present, but any binder to be adhered with other molding resins is not present.

In the latter, the resin sheet of the same kind with the molding resin is ordinarily laminated thereon and welded during insert molding or in-mold molding. Therefore, it is necessary to change the resin sheet according to the molding resin (for example, Patent Document 3), which has a problem of an increase in the number of steps to be complicated.

Further, as a resin used for the decorative sheet, among the resins described above, the polypropylene which is lightweight and excellent in chemical resistance is actively studied. However, if the decorative sheet prepared using the polypropylene and the molding resin having a high molding temperature, such as the ABS resin, the polycarbonate, and the like are subjected to insert molding or in-mold molding, design damage or insufficient adhesion has been occasionally caused in the vicinity of a gate for the molding resin. Specific examples of a countermeasure against such a case include a method for laminating a protective sheet of an ABS resin to a decorative sheet. However, if the protective sheet is used therefor, warpage or distortion has been occasionally caused in a preliminary shaped body or an injection molded article.

For example, when the polypropylene is used in the resin layer of the decorated sheet, and the ABS resin is used in the substrate sheet in Patent Document 1, warpage is caused during preliminary shaping or injection molding, leading to difficulty in processing.

With regard to Patent Document 2, in general, the ABS resin and the polyolefin-based resin are incompatible, and even if a compatibilizer is used, it is difficult to obtain a smooth sheet. When the sheet (third layer) is not smooth, if preliminary shaping or injection molding is performed, unevenness of the sheet (third layer) is raised in the sheet for decorative molding, resulted in spoiling appearance.

Thus, there still remains room for improvement in insert molding or in-mold molding using the decorative sheet, and a decorative sheet (laminate) to be welded with various molding resins has been required. Further, in the decorative sheet containing polyolefin (for example, polypropylene), the decorative sheet (laminate) in which deformation such as the warpage, the distortion, and the like is hard to occur during insert molding or in-mold molding has been required.

An object of the invention is to provide a highly versatile decorative sheet (laminate) to be welded with a variety of molding resins.

Another object of the invention is to provide a decorative sheet using polyolefin among the above-described decorative sheets, wherein deformation during molding is eliminated or reduced.

The present inventors have diligently continued to conduct study, and as a result, have found that, if a layer containing a thermoplastic elastomer (welding layer) is adopted as a protective layer of a decorative sheet (or as a part of the protective layer), sufficient adhesion with a molding resin used in insert molding or in-mold molding, such as an ABS resin, polycarbonate, polystyrene, polyester, polyamide, acrylonitrile-styrene copolymerization, an acrylic resin, polymer alloy containing two or more kinds thereof, and the like, can be obtained, and therefore even if the protective sheet is not changed according to the molding resin, a molded article excellent in durability can be produced.

Further, the present inventors have found that, if a layer containing a thermoplastic elastomer (welding layer) is adopted as a protective layer (or as a part of the protective layer) of a decorative sheet containing polyolefin among the decorative sheets, a difference in inter-layer shrinkage decreases, and warpage or distortion during molding can be reduced, and have completed the invention.

According to the invention, the following laminate and the like are provided.

1. A laminate, comprising a thermoplastic resin layer and a protective layer,
wherein the protective layer comprises a welding layer, and
the welding layer contains a thermoplastic elastomer.
2. The laminate according to 1, wherein the thermoplastic elastomer in the welding layer is a polyester-based thermoplastic elastomer.
3. The laminate according to 1 or 2,
wherein the protective layer comprises a substrate layer on a side of the thermoplastic resin layer across the welding layer, and the substrate layer contains one or more resins selected from the group consisting of polyolefin, polycarbonate, an acrylic resin, an acrylonitrile-butadiene-styrene copolymer, an acrylonitrile-styrene copolymer, polystyrene, polyester and polyamide.
4. The laminate according to 3,
wherein the protective layer comprises a bonding layer between the welding layer and the substrate layer, and the bonding layer contains one or more resins selected from the group consisting of modified polyolefin, a styrene-based thermoplastic elastomer and polyolefin.
5. The laminate according to 3,
wherein the protective layer comprises an anchorcoat layer between the welding layer and the substrate layer, and the anchorcoat layer contains one or more resins selected from the group consisting of a urethane resin, an acrylic resin, polyolefin and polyester.
6. The laminate according to any one of 1 to 5, wherein the welding layer further contains an acrylonitrile-butadiene-styrene copolymer.
7. The laminate according to any one of 1 to 6, wherein the thermoplastic resin layer contains polyolefin.
8. The laminate according to 7, wherein the thermoplastic resin layer contains polypropylene.
9. The laminate according to 8, wherein an isotactic pentad fraction of the polypropylene is 85 mol% to 99 mol%.
10. The laminate according to 8 or 9, wherein a crystallization rate of the polypropylene at 130°C is 2.5 min$^{-1}$ or less.
11. The laminate according to any one of 8 to 10, wherein the polypropylene contains a smectic form.
12. The laminate according to any one of 8 to 11, wherein the polypropylene has an exothermic peak of 1.0 J/g or more on a low-temperature side of a maximum endothermic peak in a curve of differential scanning calorimetry.
13. The laminate according to any one of 7 to 12, wherein the thermoplastic resin layer contains no nucleating agent.
14. The laminate according to any one of 1 to 6, wherein the thermoplastic resin layer contains one or more selected from the group consisting of polycarbonate, a polyamide resin, an acrylonitrile-butadiene-styrene copolymer, an acrylonitrile-styrene copolymer and an acrylic resin.

15. The laminate according to any one of 1 to 14, comprising a printed layer partly or wholly on a surface on a side of the protective layer across the thermoplastic resin layer.

16. The laminate according to any one of 1 to 15, comprising an easy-bonding layer partly or wholly on a surface on a side of the protective layer across the thermoplastic resin layer, wherein the easy-bonding layer contains one or more resins selected from the group consisting of a urethane resin, an acrylic resin, polyolefin and polyester.

17. The laminate according to 16, comprising: an undercoat layer containing one or more resins selected from the group consisting of a urethane resin, an acrylic resin, polyolefin and polyester on a surface on a side opposite to the thermoplastic resin layer across the easy-bonding layer, and a metal layer containing one or more metal elements selected from the group consisting of tin, indium, chromium, aluminum, nickel, copper, silver, gold, platinum and zinc on a surface on a side opposite to the easy-bonding layer across the undercoat layer.

18. A molded article, produced by using the laminate according to any one of 1 to 17.

19. A molded article, produced by using: the laminate according to any one of 1 to 17; and one or more molding resins selected from the group consisting of an acrylonitrile-butadiene-styrene copolymer, polycarbonate, polyester, polyamide, polystyrene, an acrylonitrile-styrene copolymer and an acrylic resin.

20. The molded article according to 18 or 19, wherein the thermoplastic resin layer in the laminate contains polypropylene, and an isotactic pentad fraction of the polypropylene is 85 mol% to 99 mol%.

21. The molded article according to any one of 18 to 20, wherein the thermoplastic resin layer in the laminate contains polypropylene, and a crystallization rate of the polypropylene at 130°C is 2.5 min$^{-1}$ or less.

22. A method for producing a molded article, comprising attaching the laminate according to any one of 1 to 17 to a mold, and supplying a molding resin to integrate the molding resin with the laminate.

23. A method for producing a molded article, comprising shaping the laminate according to any one of 1 to 17 so as to match a mold, attaching the shaped laminate to the mold, and supplying a molding resin to integrate the molding resin with the laminate.

24. The method for producing the molded article according to 22 or 23, wherein the molding resin is one or more resins selected from the group consisting of an acrylonitrile-butadiene-styrene copolymer, polycarbonate, polystyrene, polyester, polyamide, an acrylonitrile-styrene copolymer and an acrylic resin.

The invention can provide a highly versatile decorative sheet (laminate) to be welded with a variety of molding resins. Further, the invention can provide a decorative sheet using polyolefin among the above-described decorative sheets, wherein deformation during molding is eliminated or reduced.

Brief Description of the Drawings

Fig. 1 is a schematic cross-sectional view of a laminate according to one aspect of the invention.
Fig. 2 is a schematic cross-sectional view of a laminate according to one aspect of the invention.
Fig. 3 is a schematic diagram of an apparatus used in Examples and Comparative Examples.
Fig. 4 is a schematic diagram of an apparatus used in Examples and Comparative Examples.

Mode for Carrying out the Invention

[Laminate]

A laminate according to one aspect of the invention includes a thermoplastic resin layer and a protective layer. The protective layer includes a welding layer, and the welding layer contains a thermoplastic elastomer. The laminate according to one aspect of the invention can be used as a decorative sheet for decorating a molded article.

The protective layer is a layer for preventing a thermoplastic resin layer or a printed layer from being melted by heat of a melted resin (molding resin) injected upon producing the molded article by injection molding (in-mold molding, insert molding or the like) by using the laminate.

The protective layer contains the thermoplastic elastomer, whereby the protective layer and the molding resin being easily thermally welded, and therefore, the molded article in which adhesion between the laminate and a housing is high, and which is excellent in durability, can be obtained. The molding resin is not limited, as long as the molding resin is a thermoplastic resin. Specific examples thereof include an ABS resin, polycarbonate, polystyrene, polyester, polyamide, acrylonitrile-styrene copolymerization, an acrylic resin, polymer alloy containing two or more kinds thereof, and the like, and the molding resin is easily thermally fused even with such resins.

Further, when polyolefin is used in the thermoplastic resin layer in one aspect of the invention, the welding layer included in the protective layer contains the thermoplastic elastomer, and therefore shrinkage of the protective layer and shrinkage of a polyolefin resin layer can be adjusted to be comparable. Thus, deformation such as warpage, distortion, and the like during molding can be minimized, and processability of the laminate can be improved.

The protective layer may have a single-layer structure formed of one layer or a laminated structure formed of two or more layers. When the protective layer has the single-layer structure, the protective layer serves as the welding layer. When the protective layer has the laminated structure, at least one layer of two or more layers serves as the welding layer, and an outermost layer (layer on a side opposite to the thermoplastic resin layer) in the laminated structure preferably serves as the welding layer. Further, in the laminate according to one aspect of the invention, a layer in contact with the molding resin during molding preferably serves as the welding layer.

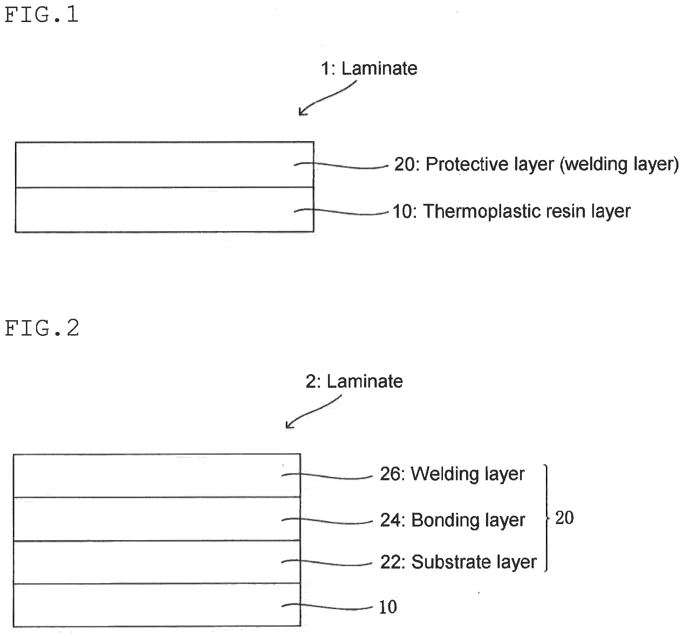

Fig. 1 shows a schematic cross-sectional view of a laminate according to one aspect of the invention.

In Fig. 1, a laminate 1 includes a thermoplastic resin layer 10 and a protective layer (welding layer) 20. It is to be noted that Fig. 1 is only for illustrating a layer structure, and an aspect ratio or a film thickness ratio is not necessarily accurate.

Hereinafter, each layer that forms the laminate according to one aspect of the invention will be described. In the present description, the term "x to y" shall express the range of numerical values of "x or more and y or less."

(Thermoplastic resin layer)

The thermoplastic resin layer is a resin layer containing a thermoplastic resin.

As the thermoplastic resin, polyolefin, polycarbonate, a polyamide resin, an ABS resin, an acrylonitrile-styrene copolymer (hereinafter, also referred to as an "AS resin"), an acrylic resin or the like can be used, and the thermoplastic resin may be polymer alloy formed of two or more kinds thereof (for example, polycarbonate-ABS resin alloy, polyamide-ABS resin alloy or the like).

As the polyolefin, polyethylene, polypropylene, cyclic polyolefin or the like can be used. Above all, from viewpoints of chemical resistance, durability and moldability, the polypropylene is preferred.

The polypropylene is a polymer at least containing propylene. Specific examples thereof include homopolypropylene, a copolymer of propylene and olefin, and the like. The homopolypropylene is preferred for the reason of heat resistance and hardness.

The copolymer of propylene and olefin may be a block copolymer or a random copolymer, or a mixture thereof.

Specific examples of the olefin include ethylene, butylene, cycloolefin, and the like.

In the polypropylene, an isotactic pentad fraction is preferably 80 mol% or more and 98 mol% or less, more preferably 86 mol% or more and 98 mol% or less, and further preferably 91 mol% or more and 98 mol% or less. When the isotactic pentad fraction is less than 80 mol%, rigidity of a molded sheet is liable to be short. On the other hand, when the isotactic pentad fraction is more than 98 mol%, transparency of the sheet is liable to be reduced. If the isotactic pentad fraction is within the above-described range, high transparency is obtained and the laminate is easily favorably decorated.

The term "isotactic pentad fraction" means an isotactic fraction in a pentad unit (5 propylene monomers are continuously linked in an isotactic sequence) in molecular chains of a resin composition. A measuring method of the fraction is described in Macromolecules, vol. 8, p. 687 (1975), for example. The fraction can be measured by $^{13}$C-NMR.

If a crystallization rate at 130°C is 2.5 min$^{-1}$ or less, such polypropylene is preferred from a viewpoint of moldability.

The crystallization rate of the polypropylene is preferably 2.5 min$^{-1}$ or less, and more preferably 2.0 min$^{-1}$ or less. If the crystallization rate is 2.5 min$^{-1}$ or less, for example, rapid curing of a portion in contact with a mold can be suppressed, and deterioration in design performance can be prevented. The crystallization rate is measured by the method described in Examples.

The polypropylene preferably contains a smectic form as a crystal structure. The smectic form is in a mesophase in a metastable state, and each domain size is small, whereby a molded product having excellent transparency, and therefore such a state is preferred. Further, the smectic form is in the metastable state, and therefore the sheet is softened at lower quantity of heat in comparison with an $\alpha$ form in which crystallization is progressed. Accordingly, such polypropylene has excellent moldability, and therefore such a state is preferred.

The polypropylene may contain, in addition to the smectic form, any other crystal form such as a $\beta$ form, a y form, an amorphous portion, and the like. For example, 30 mass% or more, 50 mass% or more, 70 mass% or more or 90 mass% or more of the polypropylene may be in the smectic form.

The polypropylene has an exothermic peak having preferably 1.0 J/g or more, and more preferably 1.5 J/g or more on a low-temperature side of a maximum endothermic peak in a curve of differential scanning calorimetry. An upper limit is not particularly limited, but is ordinarily 10 J/g or less.

The exothermic peak is measured using a differential scanning calorimeter.

Further, the polyolefin resin layer preferably contains no nucleating agent. Even if the polyolefin resin layer contains the nucleating agent, a content of the nucleating agent in the polyolefin resin layer is 1.0 mass% or less, and preferably 0.5 mass% or less.

Examples of the nucleating agent include a sorbitol-based nucleating agent, and the like, and specific examples of a commercial item thereof include GEL ALL MD (New Japan Chemical Co., Ltd.), Rikemaster FC-1 (Riken Vitamin Co., Ltd.), and the like.

The crystallization rate of the polypropylene is adjusted to 2.5 min$^{-1}$ or less, and the polypropylene is cooled at 80°C/s(second) or more to form the smectic form, without adding the nucleating agent, whereby resulting in obtaining the laminate excellent in the design performance. Further, if the laminate is heated and then shaped in the method for producing the molded article described later, the polyolefin resin layer is transformed into the α form while a fine structure derived from the smectic form is maintained. Surface hardness or transparency can be further improved by this transformation.

More specifically, in order to obtain the polypropylene excellent in transparency and gloss at the isotactic pentad fraction of 80 mol% or more and 98 mol% or less and at the crystallization rate of the polypropylene of 2.5 min$^{-1}$ or less, formation of the smectic form is ordinarily necessary. In the method for producing the molded article described later, the polypropylene is transformed into the α form while the fine structure derived from the smectic form is maintained by shaping after heating, and if the polypropylene in the molded article has the isotactic pentad fraction of 80 mol% or more and 98 mol% or less and the crystallization rate of 2.5 min$^{-1}$ or less, it is considered that the polypropylene is derived from the smectic form.

A scattering intensity distribution and a long period are calculated by a small-angle X-ray scattering analysis method, and as a result, whether or not the polyolefin resin layer is a material obtained by cooling at 80°C/s or more can be judged. More specifically, according to the above-described analysis, whether or not the polyolefin resin layer has the fine structure derived from the smectic form can be judged. Measurement is performed under the conditions described below.

- As an X-ray generator, UltraX 18HF (manufactured by Rigaku Corporation) is used, and an imaging plate is used for detection of scattering.
- Light source wavelength: 0.154 nm
- Voltage/current: 50 kV/250 mA
- Irradiation time: 60 minutes
- Camera length: 1.085 m
- Sample thickness: sheets are stacked to be 1.5 to 2.0 mm. Further, the sheets are stacked so as to align film-forming (MD) directions.

It is to be noted that, in order to shorten a measuring time, the sheets are stacked to be 1.5 to 2.0 mm, but if the measuring time is prolonged, the sample thickness can be measured even with one sheet without stacking the sheets.

The cyclic polyolefin is a polymer containing a structural unit derived from cyclic olefin, or may be a copolymer with ethylene (a cyclic polyolefin copolymer).

A melt flow rate (hereinafter, also referred to as "MFR") of the polypropylene is preferably in the range of 0.5 to 10 g/10 min. If the melt flow rate is within this range, the polypropylene is excellent in moldability to a film shape or a sheet shape. MFR of the polypropylene is measured at a measuring temperature of 230°C and a load of 2.16 kg in accordance with JIS K 7210.

MFR of the polyethylene can be adjusted to 0.1 to 10 g/10 min. If MFR is within this range, the polyethylene is excellent in moldability to the film shape or the sheet shape. MFR of the polyethylene is measured at 190°C and a load of 2.16 kg in accordance with JIS K 7210.

MFR of the cyclic polyolefin can be adjusted to 0.5 to 15 g/10 min. MFR of the cyclic polyolefin is measured at 230°C and a load of 2.16 kg in accordance with ISO1133.

Specific examples of a method for forming the polyolefin resin layer include an extrusion method, and the like.

Cooling is preferably performed at 80°C/s or more, and is performed until an internal temperature of the polyolefin resin layer reaches a crystallization temperature or less. Thus, the crystal structure of the polyolefin resin layer (particularly, polypropylene) can be formed into the smectic form described above. Cooling is performed more preferably at 90°C/s or more, and further preferably 150°C/s or more.

An additive such as a pigment, an antioxidant, a stabilizer, an ultraviolet light absorber, and the like may be blended, when necessary, in the polyolefin.

Further, a modified polyolefin resin obtained by modifying the polyolefin with a modifying compound such as, for example, maleic anhydride, dimethyl maleate, diethyl maleate, acrylic acid, methacrylic acid, tetrahydrophthalic acid, glycidyl methacrylate, hydroxyethyl methacrylate, methyl methacrylate, and the like may be blended in the polyolefin.

For the polycarbonate, a method for producing the same is not particularly limited, and a material produced by conventionally known various methods can be used. For example, a material produced by a solution method (an interfacial polycondensation method) or a melting method (a transesterification method) by using dihydric phenol and a carbonate precursor, namely, the material produced by reaction by the interfacial polycondensation method in which dihydric phenol and phosgene are allowed to react in the presence of an terminal stopping agent, the transesterification method between dihydric phenol and diphenyl carbonate or the like in the presence of the terminal stopping agent, and the like can be used.

Specific examples of the dihydric phenol can include 2,2-bis(4-hydroxyphenyl)propane[bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and the like. In addition thereto, specific examples thereof can also include hydroquinone, resorcinol, catechol, and the like. These may be used alone, or in combination of two or more kinds. Above all, a bis(hydroxyphenyl)alkane-based material is preferred, and bisphenol A is particularly preferable.

Examples of the carbonate precursor include carbonyl halide, carbonyl ester, haloformate, or the like, and specific examples thereof include phosgene, dihaloformate of dihydric phenol, diphenyl carbonate, dimethyl carbonate, diethyl carbonate, and the like. It is to be noted that this polycarbonate may have a branching structure, and specific examples of a branching agent include 1,1,1-tris(4-hydroxyphenyl)ethane, α,α',α"-tris(4-hydroxyphenyl)-1,3,5-triisopropylbenzene, fluoroglycine, trimellitic acid, isatinbis(o-cresol), and the like.

Viscosity-average molecular weight (Mv) of the polycarbonate is ordinarily 10,000 to 50,000, preferably 13,000 to 35,000, and further preferably 15,000 to 20,000. The viscosity-average molecular weight (Mv) is determined by measuring viscosity of a methylene chloride solution at 20°C by using an Ubbelohde viscometer, thereby determining limiting viscosity [η], and calculating the value according to the following formula.

$$[\eta] = 1.23 \times 10^{-5} Mv^{0.83}$$

A molecular terminal group in the polycarbonate is not particularly limited, and may be a group derived from monohydric phenol, which is a conventionally known terminal stopping agent, but is preferably a group derived from monohydric phenol having an alkyl group having 10 to 35 carbon atoms. If a molecular terminal is a group derived from phenol having an alkyl group having 10 or more carbon atoms, a polycarbonate composition obtained has favorable flowability, and if the molecular terminal is a group derived from phenol having an alkyl group having 35 or less carbon atoms, the polycarbonate composition obtained becomes favorable in heat resistance and impact resistance.

Specific examples of the monohydric phenol having the alkyl group having 10 to 35 carbon atoms include decylphenol, undecylphenol, dodecylphenol, tridecylphenol, tetradecylphenol, pentadecylphenol, hexadecylphenol, heptadecylphenol, octadecylphenol, nonadecylphenol, icosylphenol, docosylphenol, tetracosylphenol, hexacosylphenol, octacosylphenol, triacontylphenol, dotriacontylphenol, pentatriacontylphenol, and the like.

The alkyl group of alkylphenol described above may be located in any position of o-, m- and p-positions relative to a hydroxyl group, but preferably in a p-position. Further, the alkyl group may be a straight-chain alkyl group, a branched-chain alkyl group, or a mixture thereof. As a substituent thereof, at least one substitute only needs to be the above-described alkyl group having 10 to 35 carbon atom, and other four substitutes are not particularly limited, and may be an alkyl group having 1 to 9 carbon atoms, an aryl group having 6 to 20 carbon atoms, a halogen atom, or non-substituted.

Terminal blocking by the monohydric phenol having the alkyl group having 10 to 35 carbon atoms may be on any of one terminal and both terminals, and from a viewpoint of high fluidization of a PC resin composition obtained, a terminal modification ratio is preferably 20% or more, and more preferably 50% or more relative to the total of terminals. More specifically, any other terminal may be a hydroxyl group terminal, or a terminal blocked by using other terminal stopping agents described below.

Specific examples of other terminal stopping agents can include phenol, p-cresol, p-t-butylphenol, p-t-octylphenol, p-cumylphenol, p-nonylphenol, p-t-amylphenol, bromophenol, tribromophenol, pentabromophenol, and the like, which are commonly used in producing a polycarbonate resin. Above all, from a viewpoint of an environmental issue, a compound containing no halogen is preferred.

The polycarbonate may appropriately contain, in addition to the polycarbonate, a copolymer such as a PC-POS copolymer, a polyester-polycarbonate resin obtained by performing polymerization for polycarbonate in the presence of bifunctional carboxylic acid such as terephthalic acid, and the like; or an ester precursor such as an ester-forming derivative, and the like; or any other polycarbonate resin.

In the polycarbonate, a melt volume flow rate (MVR) measured in accordance with JIS K 7210 is preferably 1 to 50 cm$^3$/10 min.

Specific examples of the polyamide resin include polyamide 66, polyamide 6, polyamide 1010, polyamide 12, polyamide 11, and the like.

In the polyamide resin, MFR measured in accordance with JIS K 7210 is preferably 0.5 to 50 g/10 min.

The ABS resin is not particularly limited, but may contain a structural unit derived from a monomer other than acrylonitrile, butadiene and styrene.

In the ABS resin, MFR measured in accordance with JIS K 7210 is preferably 0.5 to 50 g/10 min.

The AS resin is not particularly limited, but may contain a structural unit derived from a monomer other than acrylonitrile and styrene.

In the AS resin, MFR measured in accordance with JIS K 7210 is preferably 0.5 to 50 g/10 min.

In the acrylic resin, MFR measured in accordance with JIS K 7210 is preferably 1 to 50 g/10 min.

The polycarbonate-ABS resin alloy is a resin prepared by mixing the polycarbonate and the ABS resin in a melted state.

In the polycarbonate-ABS resin alloy resin, MFR measured in accordance with JIS K 7210 is preferably 1 to 50 g/10 min.

The polyamide-ABS resin alloy is a resin prepared by mixing the polycarbonate and the polyamide in a melted state.

In the polyamide-ABS resin alloy resin, MFR measured in accordance with JIS K 7210 is preferably 1 to 50 g/10 min.

A thickness of the thermoplastic resin layer is ordinarily 10 to 1000 $\mu$m, and may be adjusted to 15 to 500 $\mu$m, 20 to 500 $\mu$m or 30 to 300 $\mu$m.

In the thermoplastic resin layer, the materials described above may be used in one kind alone, or in combination of two or more kinds. Further, the thermoplastic resin layer may contain a resin other than the resin described above.

(Protective layer)

The protective layer includes at least the welding layer, and may have a laminated structure including any other layer such as a substrate layer, an anchorcoat layer, a bonding layer, and the like. In the case of the laminated structure, an outermost layer in the laminated structure, namely, a layer on a side opposite to the thermoplastic resin layer preferably serves as the welding layer.

One example of the layer structure of the laminate in one aspect of the invention can include the structure described below.

[Thermoplastic resin layer/welding layer]
[Thermoplastic resin layer/substrate layer/welding layer]
[Thermoplastic resin layer/substrate layer/bonding layer/welding layer]
[Thermoplastic resin layer/substrate layer/anchorcoat layer/welding layer]
The slash "/" indicates lamination.

Fig. 2 shows a schematic cross-sectional view of a laminate when a protective layer is formed into a laminated structure formed of a substrate layer, a bonding layer and a welding layer.

In Fig. 2, a laminate 2 includes a thermoplastic resin layer 10 and a protective layer 20, in which the protective layer 20 has a laminated structure including a substrate layer 22, a bonding layer 24 and a welding layer 26 in the order from a side of the thermoplastic resin layer 10. It is to be noted that Fig. 2 is only for illustrating a layer structure, and an aspect ratio or a film thickness ratio is not necessarily accurate.

Hereinafter, each layer that forms the protective layer will be described.

(Welding layer in protective layer)

The welding layer contains the thermoplastic elastomer.

The thermoplastic elastomer is ordinarily formed of a hard segment and a soft segment. The thermoplastic elastomer exhibits rubber elasticity at ordinary temperature because the hard segment immobilizes a flow of a molecular chain, and exhibits thermoplasticity at a temperature at which the hard segment melts because the hard segment is plasticized and immobilization of the molecular chain is released.

Presence of the soft segment allows shrinkage of the protective layer to be comparable to shrinkage of the thermoplastic resin layer.

The thermoplastic elastomer ordinarily has a copolymerization type in which the hard segment and the soft segment are connected by copolymerization, and a dispersion type having a sea-island structure in which the hard segment forms a matrix, and the soft segment forms a domain.

Specific examples of the thermoplastic elastomer according to one aspect of the invention include a polyester-based thermoplastic elastomer, an acrylic-based thermoplastic elastomer, and the like, in which a polyester-based thermoplastic elastomer is preferred.

The polyester-based thermoplastic elastomer is an elastomer in which polyester is used as the hard segment, and a rubber component is used as the soft segment.

Specific examples of the polyester which is the hard segment include polyethylene terephthalate, polybutylene terephthalate, and the like, in which polybutylene terephthalate is preferred. Specific examples of the rubber component which is the soft segment include polyether, polycarbonate, and the like, in which polyether is preferred.

The polyester-based thermoplastic elastomer may be of the copolymerization type or the dispersion type.

MFR of the polyester-based thermoplastic elastomer is preferably 1 to 100 g/10 min, and more preferably 1 to 50g/10 min. MFR is measured at 230°C and a load of 21 N.

The acrylic-based thermoplastic elastomer is an elastomer in which the acrylic resin is used as the hard segment, and the rubber component is used as the soft segment.

Specific examples of the acrylic resin which is the hard segment include methyl methacrylate, ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, behenyl methacrylate, octadecyl methacrylate, phenyl methacrylate, benzyl methacrylate, and the like, in which methyl methacrylate is preferred. Specific examples of the rubber component which is the soft segment include poly(n-butyl acrylate), polybutadiene, polyisoprene, and the like, in which poly(n-butyl acrylate) is preferred.

The acrylic-based thermoplastic elastomer may be of the copolymerization type or the dispersion type.

MFR of the acrylic-based thermoplastic elastomer is preferably 2 to 100 g/10 min. MFR is measured at 230°C and a load of 2.16 kg in accordance with ISO1133.

The welding layer may contain the ABS resin in addition to the thermoplastic elastomer. The welding layer contains the ABS resin, and therefore rigidity of the welding layer can be improved. A content of the ABS resin is preferably 30 mass% or less, and more preferably 5 to 30 mass%. If the content is within this range, shrinkage of the protective layer can be favorably kept, and rigidity can be enhanced.

The ABS resin is as described in the thermoplastic resin layer. Further, an acrylonitrile-styrene copolymer (AS resin) containing no structural unit derived from butadiene may be used in place of the ABS resin.

For example, 30 mass% or more, 50 mass% or more, 70 mass% or more, 80 mass% or more, 90 mass% or more, 98 mass% or more, 99 mass% or more, 99.9 mass% or more, or 100 mass% of the welding layer may be the thermoplastic elastomer, or the thermoplastic elastomer and the ABS resin. The welding layer may consist essentially of the thermoplastic elastomer, or the thermoplastic elastomer and the ABS resin.

A thickness of the welding layer is preferably 5 to 300 μm, and more preferably 10 to 250 μm, or may be adjusted to 10 to 200 μm, 10 to 150 μm or 50 to 150 μm.

(Substrate layer in protective layer)

The substrate layer is a layer preferably containing one or more resins selected from the group consisting of polyolefin, polycarbonate, an acrylic resin, an ABS resin, an AS resin, polystyrene, polyester and polyamide. The substrate layer preferably contains one or more resins selected from the group consisting of polyolefin, polycarbonate, an ABS resin, an AS resin and polyamide.

The substrate layer is provided, and therefore rigidity of the protective layer as a whole can be improved in comparison with a case of only the welding layer. Thus, resilience is resulted therefrom in the laminate, and handling during processing is facilitated.

The polyolefin, the polycarbonate, the acrylic resin, the ABS resin, the AS resin and the polyamide are as described in the thermoplastic resin layer.

As the polystyrene, the polystyrene as a single substance may be applied, or the rubber component may be contained in the polystyrene. In the polystyrene, MFR measured in accordance with JIS K 7210 is preferably 1 to 50 g/10 min.

In the polyester resin, MFR measured in accordance with JIS K 7210 is preferably 1 to 50 g/10 min.

A thickness of the substrate layer is preferably 20 to 500 μm, and more preferably 20 to 300 μm.

For example, 30 mass% or more, 50 mass% or more, 70 mass% or more, 80 mass% or more, 90 mass% or more, 98 mass% or more, 99 mass% or more, 99.9 mass% or more, or 100 mass% of the substrate layer may be the resin described above.

(Bonding layer in protective layer)

The bonding layer is a layer preferably containing one or more resins selected from the group consisting of modified polyolefin, a styrene-based thermoplastic elastomer and polyolefin.

Raw material polyolefin of the polyolefin and the modified polyolefin described above is as described in the thermoplastic resin layer, in which polypropylene is preferred.

Specific examples of a modifying compound for the polyolefin include maleic anhydride, dimethyl maleate, diethyl maleate, acrylic acid, methacrylic acid, tetrahydrophthalic acid, glycidyl methacrylate, hydroxyethyl methacrylate, methyl methacrylate, and the like.

Specific examples of the styrene-based thermoplastic elastomer include a rubber block copolymer containing a styrene block, such as a styrene-butadiene block copolymer (SB), a styrene-butadiene-styrene block copolymer (SBS), a styrene-isoprene-styrene block copolymer (SIS), a styrene-isoprene-butadiene block copolymer (SIB), a styrene-isoprene block copolymer (SI), a styrene-ethylene-propylene block copolymer (SEP), and the like, and a hydrogenated product thereof, and the like.

MFR of the styrene-based thermoplastic elastomer is preferably 1 to 20 g/10 min. MFR is measured at 230°C and a load of 2.16 kg in accordance with ISO1133.

The bonding layer may contain two or more components among the components described above, and may be formed into a mixed layer of the styrene-based thermoplastic elastomer (for example, 30 to 90 mass%) and polyolefin (for example, 10 to 70 mass%), for example.

For example, 30 mass% or more, 50 mass% or more, 70 mass% or more, 80 mass% or more, 90 mass% or more, 98 mass% or more, 99 mass% or more, 99.9 mass% or more, or 100 mass% of the bonding layer may be the resin described above.

A thickness of the bonding layer is preferably 1 to 50 $\mu$m.

(Anchorcoat layer in protective layer)

The anchorcoat layer is a layer preferably containing one or more resins selected from the group consisting of a urethane resin, an acrylic resin, polyolefin and polyester. In consideration of the adhesion with the substrate layer or the welding layer, a urethane resin and polyolefin are preferred.

The urethane-based resin is ordinarily obtained by allowing at least diisocyanate, high molecular weight polyol and a chain extending agent to react. As the high molecular weight polyol Polyether polyol or polycarbonate polyol may be applied.

In the anchorcoat layer, the materials described above may be used in one kind alone, or in combination of two or more kinds.

For example, 30 mass% or more, 50 mass% or more, 70 mass% or more, 80 mass% or more, 90 mass% or more, 98 mass% or more, 99 mass% or more, 99.9 mass% or more, or 100 mass% of the anchorcoat layer may be the resin described above.

The anchorcoat layer can be formed by applying the resin described above with a gravure coater, a kiss coater, a bar coater or the like, and by drying the layer at 40 to 100°C for 10 seconds to 10 minutes, for example.

A thickness of the anchorcoat layer may be adjusted to 35 nm or more and 3000 nm or less, or may be adjusted to 50 nm or more and 2000 nm or less, or may be adjusted to 50 nm or more and 1000 nm or less. If the thickness of the anchorcoat layer is 35 nm or more, the adhesion with any other layer is sufficiently high. If the thickness of the anchorcoat layer is 3000 nm or less, blocking caused by stickiness can be suppressed

For example, if the anchorcoat layer is provided on one side of the substrate layer, the adhesion with the welding layer can be improved during extrusion laminating.

The protective layer may contain, in addition to the above-described layer, a coloring layer, a releasing layer or the liker, for example.

A thickness of the protective layer as a whole is ordinarily 10 to 1000 $\mu$m, preferably 50 to 500 $\mu$m, and more preferably 100 to 400 $\mu$m. If the thickness of the protective layer is 10 $\mu$m or more, a surface layer can be sufficiently protected from heat of an injection resin, and design damage and adhesion failure can be suppressed. If the thickness of the protective layer is 1000 $\mu$m or less, the protective layer is excellent in moldability of the laminate.

(Method for producing laminate)

A method for producing the laminate according to one aspect of the invention is not particularly limited, but the laminate can be produced by laminating the thermoplastic resin layer and the protective layer by a method such as dry laminating, extrusion laminating, heat laminating, and the like, for example. Quantity of heat applied to the thermoplastic resin layer during laminating is low, whereby the dry laminating being preferred.

(Printed layer)

The laminate according to one aspect of the invention may include the printed layer on a surface on a side of the protective layer across the thermoplastic resin layer. The printed layer may be provided partly or wholly thereon among the surfaces on the side of the protective layer of the thermoplastic resin layer.

A shape of the printed layer is not particularly limited, and specific examples thereof include various shapes such as a solid shape, a carbon-like shape, a wood grain shape, and the like.

As a printing method, a general printing method such as a screen printing method, an offset printing method, a gravure printing method, a roll coating method, a spray coating method, and the like can be used. In particular, in the screen printing method, an ink film thickness can be increased, and therefore an ink crack is hard to be generated upon molding the laminate into a complicated shape.

For example, in the case of the screen printing, ink excellent in stretching during molding is preferred, and specific examples thereof can include "FM3107 high concentration white" and "SIM3207 high concentration white," manufactured by Jujo Chemical Co., Ltd., but are not limited thereto.

(Easy-bonding layer)

The laminate according to one aspect of the invention may be provided with the easy-bonding layer partly or wholly on a surface on a side of the protective layer across the thermoplastic resin layer. The easy-bonding layer is a layer that can improve adhesion between the thermoplastic resin layer, and the protective layer or the undercoat layer described later.

Specific examples of the material that forms the easy-bonding layer include a urethane-based resin, an acrylic resin, a polyolefin-based resin, a polyester-based resin, and the like. In consideration of the adhesion with any other layer, or the moldability, a urethane-based resin is preferred.

The urethane-based resin is ordinarily obtained by allowing at least diisocyanate, high molecular weight polyol and a chain extending agent to react. As the high molecular weight polyol Polyether polyol or polycarbonate polyol may be applied.

In the easy-bonding layer, the materials described above may be used in one kind alone, or in combination of two or more kinds.

Even when the laminate is molded into a complicated non-planar shape, the easy-bonding layer is provided, and therefore the easy-bonding layer can follow the thermoplastic resin layer to favorably form the layer structure.

The easy-bonding layer can be formed by applying the resin described above with a gravure coater, a kiss coater, a bar coater or the like, and by drying the layer at 40 to 100°C for 10 seconds to 10 minutes, for example.

A thickness of the easy-bonding layer may be adjusted to 35 nm or more and 3000 nm or less, or may be adjusted to 50 nm or more and 2000 nm or less, or may be adjusted to 50 nm or more and 1000 nm or less. If the thickness of the easy-bonding layer is 35 nm or more, the adhesion with any other layer is sufficiently high. If the thickness of the easy-bonding layer is 3000 nm or less, blocking caused by stickiness can be suppressed.

On the easy-bonding layer (on a side opposite to the thermoplastic resin layer), various coatings such as an ink or hard coat, an antireflection coat, a thermal insulation coat, and the like can be laminated.

Further, on a surface on a side opposite to the above-described easy-bonding layer (first easy-bonding layer) across the thermoplastic resin layer, another easy-bonding layer (second easy-bonding layer) may be provided. Thus, the thermoplastic resin layer can be provided with functionality such as surface treatment, hard coating, and the like.

(Undercoat layer)

The laminate according to one aspect of the invention may be provided with the undercoat layer.

The undercoat layer is a layer that can adhere the easy-bonding layer to the metal layer described later.

Specific examples of materials that form the undercoat layer include a urethane resin, an acrylic resin, polyolefin, polyester, and the like.

From viewpoints of whitening resistance (difficulty in occurrence of the whitening phenomenon) during molding and the adhesion with the metal layer, an acrylic resin is preferred, and "DA-105" manufactured by Arakawa Chemical Industries, Ltd. can be used, for example.

The above-described materials may be used in one kind alone, or in combination of two or more kinds.

As a method for forming the undercoat layer, the undercoat layer can be formed by applying the material described above with a gravure coater, a kiss coater, a bar coater or the like, by drying the layer at 50 to 100°C for 10 seconds to 10 minutes, and by aging the layer at 40 to 100°C for 10 to 200 hours, for example.

A thickness of the undercoat layer may be adjusted to 0.05 μm to 50 μm, or may be adjusted to 0.1 μm to 10 μm, or may be adjusted to 0.5 μm to 5 μm.

(Metal layer)

The laminate according to one aspect of the invention may be provided with the metal layer. The metal layer is a layer containing metal or metal oxide.

The metal that forms the metal layer is not particularly limited, as long as the metal can provide the laminate with a metal-like design, and specific examples thereof include tin, indium, chromium, aluminum, nickel, copper, silver, gold, platinum, and zinc, and alloy containing at least one kind thereof may be used.

Among the above-described metals, indium, aluminum and chromium are particularly excellent in extensibility and a color tone, and therefore are preferred. If the metal layer is excellent in the extensibility, crazing is hard to be caused upon three-dimensionally molding the laminate.

A method for forming the metal layer is not particularly limited, but from a viewpoint of providing the laminate with the metal-like design having high texture and high-class impression, for example, a vapor deposition method such as a vacuum deposition method, a sputtering method, an ion plating method, and the like by using the above-described metal can be used. In particular, the vacuum deposition method can be performed at low cost and decreased damage to a body to be deposited. Conditions of the vacuum deposition method only need to be appropriately set according to a melting temperature or an evaporating temperature of the metal to be used.

In addition to the above-described methods, a method for coating paste containing the above-described metal or metal oxide, a plating method using the above-described metal, or the like can also be used.

A thickness of the metal layer may be adjusted to 5 nm or more and 80 nm or less. If the thickness is 5 nm or more, desired metallic gloss is easily obtained, and if the thickness is 80 nm or less, crazing is hard to be caused.

[Molded article]

The molded article can be produced by using the laminate described above.

In the molded article of the invention, when the thermoplastic resin layer contains the polypropylene, the isotactic pentad fraction of the polypropylene is preferably 80 mol% or more and 98 mol% or less.

Further, the crystallization rate of the polypropylene at 130°C is preferably 2.5 min$^{-1}$ or less, and more preferably 2.0 min$^{-1}$ or less.

A portion corresponding to the thermoplastic resin layer of the laminate can be identified by using a phase microscope or the like even after the molded article is formed. A measuring method of the isotactic pentad fraction and the crystallization rate is as described above.

[Method for producing molded article]

Specific examples of the method for producing the molded article according to one aspect of the invention include in-mold molding, insert molding, coating molding, and the like.

The in-mold molding is a method of placing the laminate in the mold, and molding the laminate into a desired shape by pressure of the molding resin to be supplied into the mold to obtain the molded article.

The in-mold molding is preferably performed by attaching the laminate to the mold and supplying the molding resin to integrate the molding resin with the laminate.

The insert molding is a method of preliminarily shaping a body to be shaped to be placed in the mold, and filling the molding resin in the shape to obtain the molded article. The insert molding can provide a further complicated shape.

The insert molding can be performed by shaping the laminate so as to match the mold, attaching the shaped laminate to the mold, and supplying the molding resin to integrate the molding resin with the shaped laminate.

The shaping (preliminary shaping) so as to match the mold can be performed by vacuum forming, pressure forming, vacuum and pressure forming, press molding, plug-assist molding, or the like.

As the molding resin, a moldable thermoplastic resin can be used. Specific examples thereof can include polypropylene, polyethylene, polycarbonate, an ABS resin, an acrylic polymer, polystyrene, polyester, polyamide, and the like, and even if any resin thereof is used, the molding resin is easily welded with the laminate (decorative sheet). The molding resin is not limited to the resins described above.

From viewpoints of molding temperature, appearance of a molded product, dimensional stability, and difficulty in occurrence of sink of the molded product, the molding resin is preferably polycarbonate, an ABS resin and an acrylic polymer, and more preferably polycarbonate and an ABS resin. The ABS resin is the same material as used in the welding layer described above. The molding resin may be a mixture of two or more kinds of the above-described resins. Further, a fiber or an inorganic filler such as talc, and the like may be added to the molding resin.

Supplying of the molding resin is preferably performed by injection, and pressure is preferably 5 MPa or more and 300 MPa or less. A mold temperature is preferably 20°C or higher and 90°C or lower.

[Application of molded article, and the like]

The laminate and the molded article according to one aspect of the invention can be used for an interior material of a vehicle, an exterior material, a housing of home electronics, a decorative steel plate, a decorative sheet, household equipment, a housing of an information communication device, and the like.

Examples

Components used in Examples and Comparative Examples will be described below.

- Polypropylene 1: homopolypropylene, "Prime Polypro F133A," manufactured by Prime Polymer Co., Ltd., MFR: 3 g/10 min
- Polypropylene 2: homopolypropylene, "Prime Polypro F-300SP," manufactured by Prime Polymer Co., Ltd., MFR: 3 g/10 min
- Polypropylene 3: random polypropylene (propylene-ethylene copolymer), "Prime Polypro F794NV," manufactured by Prime Polymer Co., Ltd., MFR: 5.8 g/10 min
- Polypropylene 4: homopolypropylene, "Prime Polypro F-704NP," manufactured by Prime Polymer Co., Ltd., MFR: 7 g/10 min
- Polyester-based thermoplastic elastomer 1: "TEFABLOC A1700N," manufactured by Mitsubishi Chemical Corporation, hard segment: polybutylene terephthalate, soft segment: polyether, MFR: 43 g/10 min
- Polyester-based thermoplastic elastomer 2: "TEFABLOC C1701N," manufactured by Mitsubishi Chemical Corporation, hard segment: polybutylene terephthalate, soft segment: polyether, MFR: 3 g/10 min
- Maleic acid-modified polypropylene 1: "MODIC F534A," manufactured by Mitsubishi Chemical Corporation, MFR: 3.5 g/10 min
- Maleic acid-modified polypropylene 2: "MODIC F502," manufactured by Mitsubishi Chemical Corporation, MFR: 1.0 g/10 min
- Maleic acid-modified polypropylene 3: "MODIC F508," manufactured by Mitsubishi Chemical Corporation, MFR: 0.8 g/10 min
- Styrene-based thermoplastic elastomer 1: "HYBRAR 7311," manufactured by Kuraray Co., Ltd., hard segment: polystyrene, soft segment: hydrogenated poly(isoprene/butadiene), MFR: 2 g/10 min
- ABS resin 1: acrylonitrile-butadiene-styrene copolymer, "Stylac 220P," manufactured by Asahi Kasei Chemicals Corporation
- Polycarbonate 1: "TARFLONA1900," manufactured by Idemitsu Kosan Co., Ltd., MVR: 19 $cm^3$/10 min
- AS resin 1: acrylonitrile-styrene copolymer, "Toyolac A20C-300," manufactured by Toray Industries, Inc., MFR: 26 g/10 min
- Polycarbonate-ABS resin alloy 1: polymer alloy between acrylonitrile-styrene copolymer and polycarbonate, "Toyolac PX10-X06," manufactured by Toray Industries, Inc., MFR: 15 g/10 min
- Polyamide-ABS resin alloy 1: polymer alloy between acrylonitrile-styrene copolymer and polyamide, "Toyolac SX01," manufactured by Toray Industries, Inc., MFR: 22 g/10 min
- Anchorcoat 1: polyester-based urethane resin, "ADCOATAD-335AE," manufactured by Toyo-Morton, Ltd.
- Anchorcoat 2: polyether-based urethane resin, "HYDRAN WLS-202," manufactured by DIC Corporation
- Anchorcoat 3: polypropylene resin, "Arrowbase DB-4010," manufactured by UNITIKALTD.

Example 1

[Production of laminate]

(1) Production of thermoplastic resin layer

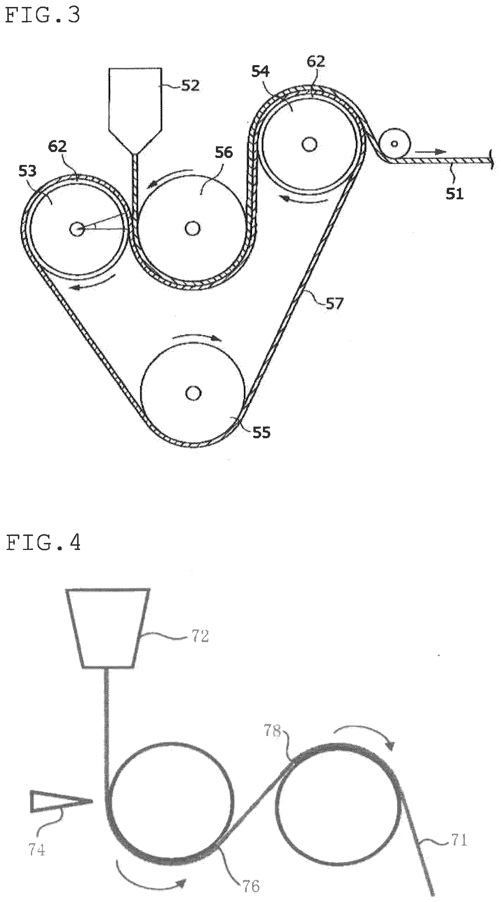

A polycarbonate sheet (thermoplastic resin layer) having a thickness of 200 $\mu$m was produced by using a production apparatus shown in Fig. 4 under the production conditions described below. In the production apparatus, a melted resin extruded from a T-die 72 of an extruder was adhered to a cooling roll 76 with an air knife 74, and cooled with cooling rolls 76 and 78 to form a resin sheet 71.

[Production conditions]

- Formulation: polycarbonate 1 (100 mass%)
- Diameter of the extruder: 30 mm
- Width of the T-die 72: 350 mm
- Take-off speed of the resin sheet 71: 2.1 m/min

- Surface temperature of the cooling rolls 76 and 78: 30°C

(2) Production of protective layer

A resin sheet (protective layer: welding layer) having a thickness of 200 μm was produced by using the production apparatus shown in Fig. 4 under the production conditions described below.

[Production conditions]

- Formulation in the protective layer: polyester-based thermoplastic elastomer 1 (100 mass%)
- Diameter of the extruder: 30 mm
- Width of the T-die 72: 350 mm
- Take-off speed of the resin sheet 71: 2.1 m/min
- Surface temperature of the cooling rolls 76 and 78: 30°C

(3) Production of laminate

Wholly on the thermoplastic resin layer obtained according to (1), "POS-911 Sumi Ink," manufactured by Teikoku Printing Inks Mfg. Co., Ltd. was screen-printed by using T-250 mesh (polyester mesh), the resulting material was dried at 60°C for 90 minutes in a drying furnace to provide a solid-shaped printed layer, and after drying the resulting material, a pressure sensitive adhesive sheet ("Mold Fit 50," manufactured by Nichiei Kako Co., Ltd.) was laminated thereon, and the protective layer obtained according to (2) was laminated thereon to form a laminate 1.

[Production and evaluation of molded article]

The laminate 1 was thermoformed by vacuum and pressure forming using a vacuum pressure forming machine ("FM-3M/H," manufactured by Minos Inc.) to produce a molded article 1. The molded article 1 has a planar inverted dish (convex) shape on a top, and a substantial rectangle (short side: 72 mm, long side: 160 mm) as viewed from above; a curve shape (R= 10 mm) in four comers; and a height of 13 mm. A thickness of the molded article 1 is 3 mm throughout the molded article 1. Further, a portion from a slope of the inverted dish (convex) shape to the top has a curved shape (R = 10 mm).

The molded article 1 was attached to a mold in which the molded article 1 was housed without any space, an ABS resin 1 was supplied into the mold with a hydraulic injection molding machine ("IS-80EPN," manufactured by Toshiba Machine Co., Ltd.) to integrate the ABS resin 1 with the molded article 1 to produce a molded article 2.

(Design damage)

A portion in proximity to a gate of the hydraulic injection molding machine in the molded article 2 was visually observed, and presence or absence of design damage in the portion was evaluated according to criteria described below. The results are shown in Table 1.

No design damage: good
Presence of design damage: poor

(Adhesion strength)

The laminate 1 forming the molded article 2 was peeled from a supply resin (ABS resin 1) at 180° in a 15-mm width, and peeling strength between the laminate 1 and the supply resin was measured with a push-pull gauge. The results are shown in Table 1.

Example 2

A protective layer was produced by using a production apparatus shown in Fig. 4 under the conditions described below to form a two-layer structure (substrate layer/welding layer) (thickness: 200 μm).

[Production conditions]

- • Formulation in the substrate layer: polycarbonate 1 (100 mass%)
- • Formulation in the welding layer polyester-based thermoplastic elastomer 1 (100 mass%)
- • Diameter of the extruder of the substrate layer: 30 mm
- • Diameter of the extruder of the welding layer: 30 mm
- • Width of the T-die 72: 350 mm
- • Take-off speed of the laminated sheet (resin sheet 71): 2.1 m/min
- • Surface temperature of the cooling rolls 76 and 78: 80°C
- • Thickness of the substrate layer: 99 $\mu$m
- • Thickness of the welding layer: 101 $\mu$m

A laminate and a molded article were produced and evaluated in the same manner as in Example 1 except for the procedures described above. The substrate layer is a layer on a side of a thermoplastic resin layer in the above-described laminated structure. The results are shown in Table 1.

Example 3

A laminate and a molded article were produced and evaluated in the same manner as in Example 2 except that a material of a thermoplastic resin layer was adjusted to an AS resin 1 (100 mass%), and a material of a substrate layer in a protective layer was adjusted to the AS resin 1 (100 mass%). The results are shown in Table 1.

Example 4

A laminate and a molded article were produced and evaluated in the same manner as in Example 2 except that a material of a thermoplastic resin layer was adjusted to polycarbonate-ABS resin alloy 1 (100 mass%), and a material of a substrate layer in a protective layer was adjusted to the polycarbonate-ABS resin alloy 1 (100 mass%). The results are shown in Table 1.

Example 5

A laminate and a molded article were produced and evaluated in the same manner as in Example 2 except that polyamide-ABS resin alloy 1 (100 mass%) was adjusted to a material of a thermoplastic resin layer, and the polyamide-ABS resin alloy 1 (100 mass%) was adjusted to a material of a substrate layer in a protective layer. The results are shown in Table 1.

Example 6

A laminate was produced in the same manner as in Example 2. Evaluation was performed in the same manner as in Example 2 except that polycarbonate 1 was supplied in place of the ABS resin 1 in producing a molded article 2. The results are shown in Table 1.

Example 7

A laminate was produced in the same manner as in Example 2. Evaluation was performed in the same manner as in Example 2 except that polyamide-ABS resin alloy 1 was supplied in place of the ABS resin 1 in producing a molded article 2. The results are shown in Table 1.

Comparative Example 1

A laminate and a molded article were produced and evaluated in the same manner as in Example 1 except that a material of a protective layer (welding layer) was adjusted to polycarbonate 1 (100 mass%). The results are shown in Table 1.

[Table 1]

| | | | Examples | | | | | | | Comparative Examples |
|---|---|---|---|---|---|---|---|---|---|---|
| | | | 1 | 2 | 3 | 4 | 5 | 6 | 7 | 1 |
| Laminate | Protective layer | Welding layer | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | Polycarbonate 1 |
| | | Substrate layer | - | Polycarbonate 1 | AS resin 1 | Polycarbonate-ABS resin alloy 1 | Polyamide-ABS resin alloy 1 | Polycarbonate 1 | Polycarbonate 1 | |
| | | Thickness of protective layer | 200 μm | 200 μm | 200 μm | 200 μm | 200 μm | 200 μm | 200 μm | - |
| | Thermoplastic resin layer | Material | Polycarbonate 1 | Polycarbonate 1 | AS resin 1 | Polycarbonate-ABS resin alloy 1 | Polyamide-ABS resin alloy 1 | Polycarbonate 1 | Polycarbonate 1 | Polycarbonate 1 |
| | | Thickness | 200 μm | 200 μm | 200 μm | 200 μm | 200 μm | 200 μm | 200 μm | 200 μm |
| Molded article | Injection resin | | ABS resin 1 | ABS resin 1 | ABS resin 1 | ABS resin 1 | ABS resin 1 | Polycarbonate 1 | Polyamide-ABS resin alloy 1 | ABS resin 1 |
| | Design damage | | Good | Good | Good | Good | Good | Good | Good | Good |
| | Adhesion strength (N/15 mm) | | 21.4 | 23.1 | 15.4 | 21.0 | 17.8 | 30.5 | 22.7 | No adhesion |

Example 8

[Production of laminate]

(1) Production of thermoplastic resin layer

A polypropylene sheet (thermoplastic resin layer) 51 was produced by using a production apparatus shown in Fig. 3.

Operation of the apparatus will be described. A melted resin (polypropylene 1) extruded from a T-die 52 of an extruder is interposed between a metal endless belt 57 and a fourth cooling roll 56 on a first cooling roll 53. In this state, the melted resin is pressure-welded with the first cooling roll 53 and the fourth cooling roll 56 and simultaneously rapidly cooled. The polypropylene sheet is subsequently interposed between the metal endless belt 57 and the fourth cooling roll 56 in a circular arc part corresponding to a substantially lower semicircle of the fourth cooling roll 56, and pressure-welded in a planar form. The polypropylene sheet is pressure-welded in the planar form and cooled with the fourth cooling roll 56, and then the polypropylene sheet adhered to the metal endless belt 57 is moved onto the second cooling roll 54 together with turning of the metal endless belt 57. In a manner similar to the above description, the polypropylene sheet is pressure-welded in a planar form with the metal endless belt 57 in a circular arc part corresponding to a substantially upper semicircle of the second cooling roll 54, and cooled again, and the polypropylene sheet cooled on the second cooling roll 54 is then peeled from the metal endless belt 57. It is to be noted that an elastic material 62 made of nitrile-butadiene rubber (NBR) is coated on surfaces of the first cooling roll 53 and the second cooling roll 54.

Production conditions of the polypropylene sheet 51 are as described below.

- Diameter of the extruder: 150 mm
- Width of the T-die 52: 1400 mm
- Thickness of the polypropylene sheet 51: 200 $\mu$m
- Take-off speed of the polypropylene sheet 51: 25 m/min
- Surface temperature of the fourth cooling roll 56 and the metal endless belt 57: 17°C
- Colling rate: 10,800°C/min (180°C/s)
- Nucleating agent: None

A crystallization rate was measured on the polypropylene used in the thermoplastic resin layer using a differential scanning calorimeter (DSC) ("Diamond DSC," manufactured by PerkinElmer, Inc.). Specifically, the polypropylene was heated from 50°C to 230°C at 10°C/min, held at 230°C for 5 minutes, and cooled from 230°C to 130°C at 80°C/min, and then crystallized by being held at 130°C. Measurement was started on a heat quantity change from a time point at which the polypropylene reached 130°C to obtain a DSC curve. The crystallization rate was determined from the DSC curve obtained according to the procedures (i) to (iv) described below.

    (i) A line obtained by approximating, by a straight line, a heat quantity change from a time point of 10 times the time from starting of measurement to a peak top to a time point of 20 times the time was applied as a baseline.

    (ii) An intersection point between a tangent having an inclination at an inflection point of a peak and the baseline was determined to determine a crystallization starting time and a crystallization ending time.

    (iii) A time from the crystallization starting time obtained to a peak top was measured as a crystallization time.

    (iv) The crystallization rate was determined from a reciprocal of the crystallization time obtained.

The crystallization rate of the polypropylene used in the thermoplastic resin layer was 0.9 min$^{-1}$.

(2) Production of protective layer

A resin sheet (protective layer: welding layer) having a thickness of 200 $\mu$m was produced by using a production apparatus shown in Fig. 4 under production conditions described below.

[Production conditions]

- Formulation in the protective layer: polyester-based thermoplastic elastomer 1 (100 mass%)
- Diameter of the extruder: 30 mm
- Width of the T-die 72: 350 mm

- Take-off speed of the resin sheet 71: 2.1 m/min
- Surface temperature of the cooling rolls 76 and 78: 30°C

(3) Production of laminate

Wholly on the thermoplastic resin layer obtained according to (1), "POS-911 Sumi Ink," manufactured by Teikoku Printing Inks Mfg. Co., Ltd. was screen-printed by using T-250 mesh (polyester mesh), the resulting material was dried at 60°C for 90 minutes in a drying furnace to provide a solid-shaped printed layer, and an adhesive ("Unistole H200," manufactured by Mitsui Chemicals, Inc.) was applied thereon with a bar coater to be 1.2 μm in a dried film thickness, the resulting material was dried at 80°C for 3 minutes, and the protective layer obtained according to (2) was laminated thereon to form a laminate.
A molded article was produced and evaluated by using the laminate obtained in the same manner as in Example 1. Further, appearance of the molded article was evaluated as described below. The results are shown in Table 2.

(Appearance)

Appearance of the molded article 1 was visually confirmed, and evaluated according to criteria described below. The results are shown in Table 1.
Neither warpage nor distortion is observed: good
At least one of warpage or distortion is observed: poor

Example 9

Aprotective layerwas produced by using a production apparatus shown in Fig. 4 under the conditions described below to form a three-layer structure (substrate layer/bonding layer/welding layer) (thickness: 200 μm).

[Production conditions]

- Formulation in the substrate layer: polypropylene 2 (100 mass%)
- Formulation in the bonding layer: maleic acid-modified polypropylene 1 (100 mass%)
- Formulation in the welding layer: polyester-based thermoplastic elastomer 1 (100 mass%)
- Diameter of the extruder of the substrate layer: 30 mm
- Diameter of the extruder of the bonding layer: 20 mm
- Diameter of the extruder of the welding layer: 30 mm
- Width of the T-die 72: 350 mm
- Take-off speed of the laminated sheet (resin sheet 71): 2.1 m/min
- Surface temperature of the cooling rolls 76 and 78: 30°C
- Thickness of the substrate layer: 104 μm
- Thickness of the bonding layer: 13 μm
- Thickness of the welding layer: 100 μm

A laminate and a molded article were produced and evaluated in the same manner as in Example 8 except for the procedures described above. The substrate layer is a layer on a side of a thermoplastic resin layer in the above-described laminated structure. The results are shown in Table 2.

Example 10

A laminate and a molded article were produced and evaluated in the same manner as in Example 9 except that a formulation in a welding layer in a protective layer was adjusted to a polyester-based thermoplastic elastomer 1 (80 mass%) and an ABS resin 1 (20 mass%). The results are shown in Table 2.

Example 11

A laminate and a molded article were produced and evaluated in the same manner as in Example 9 except that a formulation in a bonding layer in a protective layer was adjusted to maleic acid-modified polypropylene 2 (100 mass%). The results are shown in Table 2.

Example 12

A laminate and a molded article were produced and evaluated in the same manner as in Example 9 except that a formulation in a bonding layer in a protective layer was adjusted to a styrene-based thermoplastic elastomer 1 (70 mass%) and polypropylene 3 (30 mass%). The results are shown in Table 2.

Example 13

A laminate and a molded article were produced and evaluated in the same manner as in Example 9 except that a formulation in a welding layer in a protective layer was adjusted to a polyester-based thermoplastic elastomer 2 (100 mass%). The results are shown in Table 2.

Example 14

A laminate and a molded article were produced and evaluated in the same manner as in Example 9 except that a formulation in a bonding layer in a protective layer was adjusted to maleic acid-modified polypropylene 3 (100 mass%), a formulation in a substrate layer was adjusted to polypropylene 4 (100 mass%), a thickness of the protective layer was adjusted to 300 $\mu$m, and a supply resin in producing a molded article 2 was adjusted to polycarbonate 1. The results are shown in Table 2.

Example 15

A laminate and a molded article were produced and evaluated in the same manner as in Example 14 except that a supply resin in producing a molded article 2 was adjusted to an AS resin 1. The results are shown in Table 2.

Example 16

A laminate and a molded article were produced and evaluated in the same manner as in Example 14 except that a supply resin in producing a molded article 2 was adjusted to polycarbonate-ABS resin alloy 1. The results are shown in Table 2.

Example 17

A laminate and a molded article were produced and evaluated in the same manner as in Example 14 except that a supply resin in producing a molded article 2 was adjusted to polyamide-ABS resin alloy 1. The results are shown in Table 2.

Example 18

An anchorcoat 1 was coated on one side of a substrate layer (polypropylene 1) having a thickness of 200 $\mu$m according to a gravure coating method to be 100 nm in a dried film thickness. Then, a welding layer (polyester-based thermoplastic elastomer 1) was subjected to extrusion laminating to a surface of the substrate layer on which the anchorcoat was coated to form a three-layer protective layer (welding layer/anchorcoat layer/substrate layer) having a thickness of 300 $\mu$m. A laminate and a molded article were produced and evaluated in the same manner as in Example 8 except for the procedures described above. The results are shown in Table 2.

Example 19

A laminate and a molded article were produced and evaluated in the same manner as in Example 18 except that the anchorcoat layer was adjusted to an anchorcoat 2. The results are shown in Table 2.

Example 20

A laminate and a molded article were produced and evaluated in the same manner as in Example 18 except that the anchorcoat layer was adjusted to an anchorcoat 3. The results are shown in Table 2.

Comparative Example 2

A laminate and a molded article were produced and evaluated in the same manner as in Example 8 except that a formulation in a protective layer (welding layer) was adjusted to an ABS resin 1 (100 mass%). The results are shown in Table 2.

Comparative Example 3

Corona treatment was applied to the polypropylene sheet obtained according to "(1) Production of thermoplastic resin layer" in Example 8, a urethane resin ("HYDRAN WLS-202," manufactured by DIC Corporation) was applied thereon with a bar coater to be 230 nm in a dried film thickness, and the resulting material was dried at 80°C for 1 minute to form an easy-bonding layer. The corona treatment was applied to the polypropylene sheet surface by using a high frequency generator (high frequency generator "CT-0212," manufactured by Wedge Co., Ltd.). On the easy-bonding layer, a binder ("IMB-HF006," manufactured by Teikoku Printing Inks Mfg. Co., Ltd) was printed according to the screen printing method to form a laminate.

The laminate obtained was attached to a mold used in producing the molded article 2 in Example 8, the ABS resin 1 was supplied into the mold with a hydraulic injection molding machine ("IS-80EPN," manufactured by Toshiba Machine Co., Ltd.) to integrate the ABS resin 1 with the laminate to produce a molded article. Design damage and adhesion strength were evaluated on the molded article obtained in the same manner as in Example 1. The results are shown in Table 2.

[Table 2]

| | | | Examples | | | | | | | | | | | | | | Comparative Examples | |
|---|---|---|---|---|---|---|---|---|---|---|---|---|---|---|---|---|---|---|---|
| | | | 8 | 9 | 10 | 11 | 12 | 13 | 14 | 15 | 16 | 17 | 18 | 19 | 20 | 2 | 3 |
| Laminate | Protective layer | Welding layer | Polyester-based thermoplastic elastomer 1 | Polyester-based thermoplastic elastomer 1 | Polyester-based thermoplastic elastomer 1 (80 mass%) ABS resin 1 (20 mass%) | Polyester-based thermoplastic elastomer 1 | Polyester-based thermoplastic elastomer 1 | Polyester-based thermoplastic elastomer 2 | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | Polyester-based thermoplastic elastomer 1 | ABS resin 1 | - |
| | | Bonding layer | - | Maleic acid-modified polypropylene 1 | Maleic acid-modified polypropylene 1 | Maleic acid-modified polypropylene 2 | Styrene-based thermoplastic elastomer 1 (70 mass%) Polypropylene 3 (30 mass%) | Maleic acid-modified polypropylene 1 | Maleic acid-modified polypropylene 3 | Maleic acid-modified polypropylene 3 | Maleic acid-modified polypropylene 3 | Maleic acid-modified polypropylene 3 | - | - | - | - | - |
| | | Anchor-coat layer | - | - | - | - | - | - | - | - | - | - | Anchor-coat 1 | Anchor-coat 2 | Anchor-coat 3 | - | - |
| | | Substrate layer | - | Polypropylene 2 | Polypropylene 2 | Polypropylene 2 | Polypropylene 2 | Polypropylene 2 | Polypropylene 4 | Polypropylene 4 | Polypropylene 4 | Polypropylene 4 | Polypropylene 1 | Polypropylene 1 | Polypropylene 1 | - | - |

(continued)

| | | | Examples | | | | | | | | | | | | | | Comparative Examples | |
|---|---|---|---|---|---|---|---|---|---|---|---|---|---|---|---|---|---|---|---|
| | | | 8 | 9 | 10 | 11 | 12 | 13 | 14 | 15 | 16 | 17 | 18 | 19 | 20 | 2 | 3 |
| | | Thickness of protective layer | 200 μm | 200 μm | 200 μm | 200 μm | 200 μm | 200 μm | 300 μm | 300 μm | 300 μm | 300 μm | 300 μm | 300 μm | 300 μm | 200 μm | - |
| | Thermoplastic resin layer | Material | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 | Polypropylene 1 |
| | | Thickness | 200 μm | 200 μm | 200 μm | 200 μm | 200 μm | 200 μm | 200 μm | 200 μm | 200 μm | 200 μm | 200 μm | 200 μm | 200 μm | 200 μm | 200 μm |
| Molded article | Injection resin | | ABS resin 1 | ABS resin 1 | ABS resin 1 | ABS resin 1 | ABS resin 1 | ABS resin 1 | Polycarbonate 1 | AS resin 1 | Polycarbonate-ABS resin alloy | Polyamide-ABS resin alloy 1 | ABS resin 1 | ABS resin 1 | ABS resin 1 | ABS resin 1 | ABS resin 1 |
| | Appearance | | Good | Good | Good | Good | Good | Good | Good | Good | Good | Good | Good | Good | Good | Poor | - |
| | Design damage | | Good | Good | Good | Good | Good | Good | Good | Good | Good | Good | Good | Good | Good | Good | Poor |
| | Adhesion strength (N/15 mm) | | 19,7 | 32,1 | 27,1 | 21,8 | 160 | 21,4 | 466 | 456 | 45,0 | 31,8 | 59,1 | 30,1 | 32,5 | 21,3 | No adhesion |

22

Tables 1 and 2 show that the laminates in Examples 1 to 20 cause no design damage in contact with various molding resins, and further have sufficient adhesion strength with the molding resins, and the laminates are highly versatile decorative sheets. Further, Table 2 shows that the laminates in Examples 8 to 20 further cause no deformation such as warpage, distortion, and the like during molding, and have excellent appearance even after molding.

Several embodiments and/or Examples of the present invention have been described in detail above, but those skilled in the art will readily make a great number of modifications to the exemplary embodiments and/or Examples without substantially departing from new teachings and advantageous effects of the invention. Accordingly, all such modifications are included within the scope of the invention.

The entire contents of Document described in the description and the description of the Japanese application serving as a basis of claiming the priority concerning the present application to the Paris Convention are incorporated by reference herein.

**Claims**

1. A laminate, comprising a thermoplastic resin layer and a protective layer,
   wherein the protective layer comprises a welding layer, and
   the welding layer contains a thermoplastic elastomer.

2. The laminate according to claim 1, wherein the thermoplastic elastomer in the welding layer is a polyester-based thermoplastic elastomer.

3. The laminate according to claim 1 or 2,
   wherein the protective layer comprises a substrate layer on a side of the thermoplastic resin layer across the welding layer, and
   the substrate layer contains one or more resins selected from the group consisting of polyolefin, polycarbonate, an acrylic resin, an acrylonitrile-butadiene-styrene copolymer, an acrylonitrile-styrene copolymer, polystyrene, polyester and polyamide.

4. The laminate according to claim 3,
   wherein the protective layer comprises a bonding layer between the welding layer and the substrate layer, and
   the bonding layer contains one or more resins selected from the group consisting of modified polyolefin, a styrene-based thermoplastic elastomer and polyolefin.

5. The laminate according to claim 3,
   wherein the protective layer comprises an anchorcoat layer between the welding layer and the substrate layer, and
   the anchorcoat layer contains one or more resins selected from the group consisting of a urethane resin, an acrylic resin, polyolefin and polyester.

6. The laminate according to any one of claims 1 to 5, wherein the welding layer further contains an acrylonitrile-butadiene-styrene copolymer.

7. The laminate according to any one of claims 1 to 6, wherein the thermoplastic resin layer contains polyolefin.

8. The laminate according to claim 7, wherein the thermoplastic resin layer contains polypropylene.

9. The laminate according to claim 8, wherein an isotactic pentad fraction of the polypropylene is 85 mol% to 99 mol%.

10. The laminate according to claim 8 or 9, wherein a crystallization rate of the polypropylene at 130°C is 2.5 min$^{-1}$ or less.

11. The laminate according to any one of claims 8 to 10, wherein the polypropylene contains a smectic form.

12. The laminate according to any one of claims 8 to 11, wherein the polypropylene has an exothermic peak of 1.0 J/g or more on a low-temperature side of a maximum endothermic peak in a curve of differential scanning calorimetry.

13. The laminate according to any one of claims 7 to 12, wherein the thermoplastic resin layer contains no nucleating agent.

**14.** The laminate according to any one of claims 1 to 6, wherein the thermoplastic resin layer contains one or more selected from the group consisting of polycarbonate, a polyamide resin, an acrylonitrile-butadiene-styrene copolymer, an acrylonitrile-styrene copolymer and an acrylic resin.

**15.** The laminate according to any one of claims 1 to 14, comprising a printed layer partly or wholly on a surface on a side of the protective layer across the thermoplastic resin layer.

**16.** The laminate according to any one of claims 1 to 15, comprising an easy-bonding layer partly or wholly on a surface on a side of the protective layer across the thermoplastic resin layer, wherein the easy-bonding layer contains one or more resins selected from the group consisting of a urethane resin, an acrylic resin, polyolefin and polyester.

**17.** The laminate according to claim 16, comprising: an undercoat layer containing one or more resins selected from the group consisting of a urethane resin, an acrylic resin, polyolefin and polyester on a surface on a side opposite to the thermoplastic resin layer across the easy-bonding layer; and a metal layer containing one or more metal elements selected from the group consisting of tin, indium, chromium, aluminum, nickel, copper, silver, gold, platinum and zinc on a surface on a side opposite to the easy-bonding layer across the undercoat layer.

**18.** A molded article, produced by using the laminate according to any one of claims 1 to 17.

**19.** A molded article, produced by using: the laminate according to any one of claims 1 to 17; and one or more molding resins selected from the group consisting of an acrylonitrile-butadiene-styrene copolymer, polycarbonate, polyester, polyamide, polystyrene, an acrylonitrile-styrene copolymer and an acrylic resin.

**20.** The molded article according to claim 18 or 19, wherein the thermoplastic resin layer in the laminate contains polypropylene, and an isotactic pentad fraction of the polypropylene is 85 mol% to 99 mol%.

**21.** The molded article according to any one of claims 18 to 20, wherein the thermoplastic resin layer in the laminate contains polypropylene, and a crystallization rate of the polypropylene at 130°C is 2.5 min$^{-1}$ or less.

**22.** A method for producing a molded article, comprising attaching the laminate according to any one of claims 1 to 17 to a mold, and supplying a molding resin to integrate the molding resin with the laminate.

**23.** A method for producing a molded article, comprising shaping the laminate according to any one of claims 1 to 17 so as to match a mold, attaching the shaped laminate to the mold, and supplying a molding resin to integrate the molding resin with the laminate.

**24.** The method for producing the molded article according to claim 22 or 23, wherein the molding resin is one or more resins selected from the group consisting of an acrylonitrile-butadiene-styrene copolymer, polycarbonate, polystyrene, polyester, polyamide, an acrylonitrile-styrene copolymer and an acrylic resin.

FIG.1

1: Laminate

20: Protective layer (welding layer)

10: Thermoplastic resin layer

FIG.2

2: Laminate

26: Welding layer

24: Bonding layer }20

22: Substrate layer

10

FIG.3

FIG.4

# EP 3 683 052 A1

<table>
<tr><td colspan="2" align="center">INTERNATIONAL SEARCH REPORT</td><td colspan="2">International application No.<br>PCT/JP2018/033751</td></tr>
</table>

**A. CLASSIFICATION OF SUBJECT MATTER**
Int.Cl. B32B25/08(2006.01)i, B32B27/32(2006.01)i

According to International Patent Classification (IPC) or to both national classification and IPC

**B. FIELDS SEARCHED**

Minimum documentation searched (classification system followed by classification symbols)
Int.Cl. B32B25/08, B32B27/32

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2005-168810 A (FUJIMORI KOGYO CO., LTD.) 30 June 2005, claims, examples 1-6, fig. 1-3 & US 2007/0114144 A1, claims, fig. 1 & WO 2005/055918 A1 & EP 1693044 A1 & KR 10-2006-0126642 A & CN 1901873 A | 1, 7-8, 18-19, 22-24<br>9-13, 20-21 |
| X<br>Y | JP 55-69454 A (DENKI KAGAKU KOGYO KABUSHIKI KAISHA) 26 May 1980, claims, examples 1-3 (Family: none) | 1, 7-8, 18<br>9-13, 20-21 |

☒ Further documents are listed in the continuation of Box C.  ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 30 November 2018 (30.11.2018) | 11 December 2018 (11.12.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2018/033751

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | JP 2006-7508 A (TOPPAN PRINTING CO., LTD.) 12 January 2006, claims, examples 1-4, fig. 1 (Family: none) | 1, 3-5, 7-8, 16, 18<br>9-13, 20-21 |
| X | JP 2002-331578 A (OKURA INDUSTRIAL CO., LTD.) 19 November 2002, claims, paragraph [0024], examples 1, 2 (Family: none) | 1, 18 |
| X | JP 3-120044 A (DICEL CHEMICAL INDUSTRIES, LTD.) 22 May 1991, claims, examples 1-5 (Family: none) | 1-2, 18 |
| X<br>Y | JP 2010-5935 A (TORAY ADVANCED FILM CO., LTD.) 14 January 2010, claims, paragraph [0037], examples 1-4 (Family: none) | 1, 7-8, 18-19<br>9-13, 20-21 |
| X<br>Y | JP 2013-180792 A (LINE PLAST KK) 12 September 2013, claims, paragraphs [0022], [0025], examples 1-2, fig. 1 (Family: none) | 1, 3, 7-8, 14, 18<br>9-13, 20-21 |
| X<br>Y | WO 2013/161291 A1 (IDEMITSU UNITECH CO., LTD.) 31 October 2013, claims, examples 1-7, fig. 1-3 & TW 201402338 A | 1, 3, 7, 8, 15, 18-19, 22-24<br>9-13, 20-21 |
| X<br>Y | JP 2007-136783 A (TOHCELLO CO., LTD.) 07 June 2007, claims, examples 1-6 (Family: none) | 1, 3, 7, 8, 15, 18-19, 22-24<br>9-13, 20-21 |
| X<br>Y | JP 2003-266615 A (DAINIPPON PRINTING CO., LTD.) 24 September 2003, claims, paragraphs [0021], [0038], fig. 1-3 (Family: none) | 1, 3, 7, 8, 15, 18-19, 22-24<br>9-13, 20-21 |
| Y | WO 2017/126663 A1 (IDEMITSU UNITECH CO., LTD.) 27 July 2017, claims, paragraphs [0016]-[0022] & DE 112017000476 T & CN 108495750 A & KR 10-2018-0101401 A | 9-13, 20-21 |
| A | JP 2014-198415 A (IDEMITSU UNITECH CO., LTD.) 23 October 2014, entire text (Family: none) | 1-24 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008094074 A
- JP 2003266615 A
- JP 2012240421 A

**Non-patent literature cited in the description**

- *Macromolecules,* 1975, vol. 8, 687